Europäisches Patentamt

European Patent Office

Office européen des brevets

(19)

(11) **EP 1 134 885 A1**

(12) **EUROPÄISCHE PATENTANMELDUNG**

(43) Veröffentlichungstag:
    **19.09.2001 Patentblatt 2001/38**

(51) Int Cl.[7]: **H02P 9/30**, H02J 7/14,
    H02J 7/24

(21) Anmeldenummer: **01105323.8**

(22) Anmeldetag: **07.03.2001**

(84) Benannte Vertragsstaaten:
    **AT BE CH CY DE DK ES FI FR GB GR IE IT LI LU
MC NL PT SE TR**
    Benannte Erstreckungsstaaten:
    **AL LT LV MK RO SI**

(30) Priorität: **14.03.2000 DE 10012353**

(71) Anmelder: **MAN Nutzfahrzeuge
Aktiengesellschaft
80976 München (DE)**

(72) Erfinder:
  • **Spaderna, Josef, Dipl.-Ing.
85229 Markt Indersdorf (DE)**
  • **Zimmer, Martin, Dipl.-Ing.
81541 München (DE)**

(54) **Verfahren zur Spannungsvorgabe für die Generatorregelung eines Kraftfahrzeuges**

(57)    Verfahren für die Generatorregelung eines Kraftfahrzeuges, mit einem Generator, der mit einem Multifunktionsregler (MFR) oder einem anderen Regler mit einstell- und/oder vorgebbarer Regelspannung zur Regelung der Generatorspannung versehen ist und der Multifunktionsregler (MFR) die Akkumulatorspannung als Eingangsregelgröße für die Regelung der Generatorspannung verwendet und, abhängig von der Temperatur des Multifunktionsreglers, dieser eine TK-Bildung vornimmt, mit der die Regelspannung für den Generator beaufschlagt wird, mit einem zentralen Bordrechner (ZBR) oder gleichwertigen Rechner, der die Bordspannung und die Drehzahl des Verbrennungsmotors als Eingangssignale hat, dadurch gekennzeichnet, dass durch die Verwendung von mindestens zwei betriebsspezifischen Parametern, wie beispielsweise der Akkumulatortemperatur und der ununterbrochenen Motorbetriebsdauer, im zentralen Bordrechner (ZBR) oder gleichwertigen Rechner die Bildung einer Spannungsvorgabe $B_{sen}$ erfolgt, die vom zentralen Bordrechner (ZBR) als Regelgröße für die Spannungsregelung des Generators an den Multifunktionsregler (MFR) eingegeben wird, wobei die Akkumulatorspannung und die TK-Bildung als Regelsignale außer Kraft gesetzt werden.

Fig.1

**Beschreibung**

Die Erfindung betrifft ein Verfahren zur Spannungsvorgabe für die Generatorregelung eines Kraftfahrzeuges nach dem Oberbegriff des Anspruches 1.

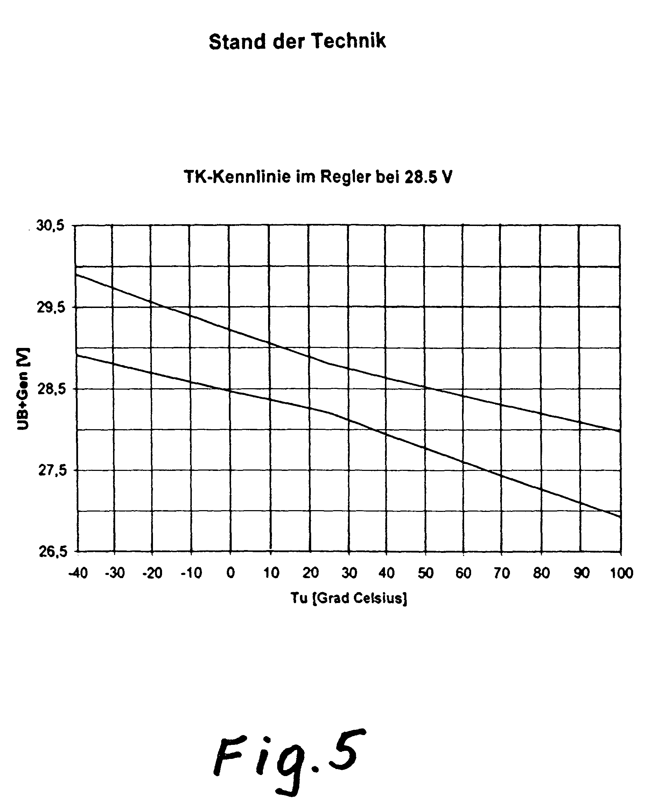

Den Stand der Technik, wie der Anmelder sie in seinen Fahrzeugen verwendet, ist in der Fig. 5 gezeigt. In diesem Anwendungsfall wird die Akkumulatorspannung als Führungsgröße für die Regelung des Spannungsausganges B+ des Generators verwendet. Abhängig von der Generatortemperatur mit Multifunktionsregler (ist eine Baueinheit), ist eine TK-Bildung im Multifunktionsregler abgelegt, mit der bei niedrigen Temperaturen die Sollspannungsführungsgröße für die Ausgangsspannung B+ am Generator erhöht und bei höheren Temperaturen erniedrigt wird, damit der Akkumulator in beiden Fällen richtig geladen werden soll.

Bei dem genannten Gegenstand des Anmelders hat die Regelung den Nachteil, dass die Generatorbzw. Reglertemperatur für die TK-Bildung herangezogen wird. Das Temperaturverhalten des Akkumulators ist aber nicht wie das eines Generators. Akkumulator und Generator sind außerdem an unterschiedlichen Stellen angeordnet.

Aufgabe der Erfindung ist es, ein Verfahren anzugeben, das den Akkumulator vollständig lädt. Außerdem soll eine lange Lebensdauer des Akkumulators erreicht werden.

Die Aufgabe wird erfindungsgemäß durch die Merkmale des Anspruches 1 gelöst.

Dadurch, dass mindestens zwei betriebsspezifische Parameter über den zentralen Bordrechner (ZBR) oder gleichwertigen Rechner bestimmt werden und ein daraus resultierendes Ergebnis als Zielgröße dem Multifunktionsregler am Generator zugeführt wird, findet eine optimale Spannungsregelung statt.

**Akkumulatortemperatur**

In diesem Beispiel ist die erforderliche Ladespannung des Akkumulators in einem Temperaturbereich von ca. -10°C bis +50°C sensibel. Außerhalb dieses Bereiches, im niedrigen Temperaturbereich, bleibt die erforderliche Ladespannung gleich hoch und im höheren Temperaturbereich gleich niedrig. Der Grund hierfür ist, dass die Bordnetzspannung in den Minimal- und Maximalwerten limitiert ist, weil die Funktionsfähigkeit der elektrischen Komponenten, z. B. elektrische Verbraucher, sichergestellt sein muss.

Die Temperaturänderung eines Akkumulators ist sehr träge, weil der Akkumulator viel Masse auf kleinem Raum darstellt, die, im Gegensatz z. B. zum Generator, unbewegt ist.

Die Erfassung der Akkumulatortemperatur ist am genauesten, wenn sie direkt, z. B. am Gehäuse, gemessen wird. Diese Messung erfordert jedoch einen Messwertgeber am Akkumulator und eine Leitung zum Bordrechner zur Verarbeitung des Signals.

Die von Generatorherstellern erstellte und aus der einschlägigen Literatur bekannten TK-Kennlinien, nach der die Generatorausgangsspannung geregelt wird, schließen einen Bereich von etwa -40°C bis +100°C ein, in welchem sie einen Verlauf mit negativer Steigung haben. Die Kurven sind bereits als solche entweder veraltet, oder so unpassend, dass sie den Erfordernissen für eine Ladung eines Akkumulators nicht Rechnung tragen.

**Temperatur des Multifunktionsreglers (MFR) am Generator**

In der Erwärmungsphase folgt die Temperatur des MFR etwa der Kühlwassertemperatur des Verbrennungsmotors, allerdings beabstandet und zeitlich versetzt. Nach der Erwärmungsphase bleibt die Temperatur des MFR annähernd konstant unter der Kühlwassertemperatur.

Der MFR hat eine temperaturabhängige Regelung, der die TK-Kennlinie zugrunde liegt und mit der die Generatorausgangsspannung gebildet wird. Der TK-Kennlinie wiederum liegt als Bezugstemperatur die Reglertemperatur des MFR zugrunde. Dadurch wird die Regelung durch den MFR, abhängig vor allem von der Dauer des Motorlaufes, zumindest zunehmend unpassend, weil die Erwärmung des Reglers wesentlich schneller erfolgt, als die Erwärmung des Akkumulators. Der Akkumulator wird deshalb, weil die Beharrungstemperatur des MFR wesentlich schneller erreicht wird und dann wesentlich höher ist, als die Ist-Temperatur des Akkumulators, mit einer zu niedrigen Ladespannung versorgt und damit nicht voll geladen.

**Rechnerische Ermittlung der Akkumulatortemperatur**

Zunächst sieht es am einfachsten aus, wenn man die Akkumulatortemperatur direkt misst und das Temperatursignal an den ZBR gibt. Dies ist aber nicht der Fall, weil serienmäßig in oder an den Akkumulator ein Temperatursensor angebracht werden müsste. Da in einem Lkw oder Omnibus zwei 12V-Akkumulatoren für 24V Nennspannung erforderlich sind, müsste für jeden der Akkumulatoren ein Temperatursensor vorgesehen werden.

Erfindungsgemäß wird die Akkumulatortemperatur von der Außentemperatur, die der Bordrechner zur Verfügung hat, abgeleitet. Die Annäherung der Akkumulatortemperatur an eine veränderte Lufttemperatur erfolgt nach einer Exponentialfunktion, d. h. bei einer vorgegebenen, zur Akkumulatortemperatur mit größerem Unterschied behafteten Lufttemperatur nähert sich die Akkumulatortemperatur zunächst relativ schnell, dann langsam.

Da das Berechnen der Akkumulatortemperatur nach der genannten Exponentialfunktion viel Kapazität des ZBR binden würde, wird wie nachfolgend beschrieben, verfahren. Außerdem ist nach dem Abstellen des Fahrzeuges auch der ZBR abgeschaltet, so dass im abgestellten Zustand des Fahrzeuges keine Berechnung durchführbar wäre.

Vereinfacht wird nun wie folgt verfahren:

a) der ZBR speichert die letzte gemessene Außentemperatur vor dem Abstellen des Fahrzeuges nichtflüchtig,

b) nach dem Starten des Fahrzeuges wird die aktuelle Außentemperatur gemessen,

c) die Akkumulatortemperatur hat sich dann nach der Formel geändert:

$$T'_{AKK} = T_{aktuell} \cdot 0,8 ... 0,9$$

$$T''_{AKK} = T_{abstell} \cdot 0,2 ... 0,1$$

$$T_{AKK, \, aktuell} = T'_{AKK} + T''_{AKK}$$

$T_{aktuell}$, $T_{abstell}$ sind Außentemperaturen in °C.

Die Multiplikationskonstanten errechen sich dabei aus einem Zeitfaktor und der Exponentialfunktion.

Beispiel:

Die Außentemperatur kurz vor dem Abstellen des Fahrzeuges beträgt +5°C, die Außentemperatur nach dem Starten des Fahrzeuges beträgt -5°C (z. B. nach 10 Stunden Abstellzeit). Die Temperaturänderung des Akkumulators beträgt demnach etwa

$$T_{AKK, \, aktuell} = -5°C \cdot 0,9 + 5°C \cdot 0,1$$
$$= -4°C$$

Die errechnete Akkumulatortemperatur beträgt in diesem Fall also etwa -4°C, ist ausreichend genau und kann für eine sich anschließende Zeit der Motorbetriebsdauer von z. B. 200 Minuten für die Spannungsvorgabe $B_{sen}$ verwendet werden. Danach kann die aktuelle Außentemperatur verwendet werden.
Im Fahrzeugbetrieb ist der ZBR aber angeschaltet und nimmt den Wert der Außentemperatur, z. B. jede Minute. Durch die ständige Messung und rechnerische Nachführung der Akkumulatortemperatur während des Fahrzeugbetriebes weicht die errechnete Akkumulatortemperatur immer weniger von der tatsächlichen Akkumulatortemperatur ab. Nach mehrstündiger Betriebsdauer hat man deshalb ziemlich genau die tatsächliche Akkumulatortemperatur.
Eine demgegenüber die Rechenleistung schonende Berechnung der Akkumulatortemperatur ist dann gegeben, wenn von der zugrunde gelegten Exponentialfunktion beispielsweise 4 Punkte und der Nullpunkt in den Bordrechner eingegeben werden und dazwischenliegende Punkte durch den Bordrechner mittels linearer Interpolierung ermittelt werden. Die rechnerisch ermittelte Akkumulatortemperatur wird solange für die Spannungsvorgabe $B_{sen}$ verwendet, bis eine Annäherung an die Außentemperatur von etwa 90% erreicht ist, dann wird die Außentemperatur als Akkumulatortemperatur gesetzt.

## Betriebsdauer des Fahrzeuges

Die Betriebsdauer des Fahrzeuges geht ebenfalls in das erfindungsgemäße Verfahren ein. Zu Beginn des Betriebes eines Fahrzeuges soll der Generator einen möglichst hohen Strom liefern, um den Akkumulator nachzuladen. Dies geschieht mit einer hohen Spannungsvorgabe $B_{sen}$ an den MFR.
Im Laufe der ununterbrochenen Betriebszeit wird die Spannungsvorgabe $B_{sen}$ abgesenkt, bis diese nach einer längeren Betriebszeit auf einem Niedrigwert beharren kann, abhängig natürlich vom aktuellen Stromverbrauch des Fahrzeuges. Wenn die genannte längere Betriebszeit nicht erreicht wird, beginnt der Ladevorgang und die Zeitzählung wieder von Neuem, wenn das Fahrzeug wieder gestartet wird.
Erfindungsgemäß werden nun die Parameter Akkumulatortemperatur und dazu gehörende mindeste Ladespannung sowie ununterbrochene Betriebsdauer des Fahrzeuges und Ladespannung zusammengeführt für die Spannungsvorgabe von $B_{sen}$ als Minimalwert.
Das Diagramm mit 3 Achsen gibt ein räumliches Bild, ähnlich einer Schildmütze. Der gewölbte Teil ist der sensible Teil der Spannungsvorgabe $B_{sen}$. Dieser gewölbte Teil wird durch die Parameter von Akkumulatortemperatur und Motorbetriebsdauer bestimmt. Die Spannungsvorgabe $B_{sen}$ ist die Spannung, die auf dem Bordnetz erreicht werden soll.
Es ist vorstellbar, dass in absehbarer Zeit Sensoren für die Bestimmung der Säuredichte von Akkumulatoren preiswert und serienmäßig, z. B. in jedem Akkumulator, zur Verfügung stehen oder auch preiswert in kleineren Serien machbar sein könnten.
In einem solchen Fall kann das erfindungsgemäße Verfahren zur Spannungsvorgabe von $B_{sen}$ noch genauer oder, je nach Anforderung, vereinfacht werden. Der große Vorteil der Kenntnis der Säuredichte und zusätzlich der errechneten Akkumulatortemperatur ist, dass über die Säuredichte der tatsächlich aktuelle Ladezustand des Akkumulators ermittelbar ist und der Akkumulator über die Spannungsvorgabe $B_{sen}$, abhängig von der Säuredichte, relativ schnell und vollständig wieder aufladbar ist.
Mit dem erfindungsgemäßen Verfahren sind auch noch weitere betriebsspezifische Parameter eingebbar.
So ist beispielsweise nach dem Einschalten des Abblendlichtes die Spannungsvorgabe B$_{sen}$ absenkbar auf eine Schonspannung B$_{sen\ Schon}$. Dadurch werden Beleuchtungsmittel geschont.

Wenn eines der Bremsorgane, vor allem eine Dauerbremse, eingeschaltet ist, ist die Spannungsvorgabe B$_{sen}$ anhebbar.

Es kann aber sinnvoll sein, wenn bei Fahrt ab einer Mindestgeschwindigkeit und der Wegnahme der Leistungsanforderung am Gaspedal, bereits eine Erhöhung der Spannungsvorgabe B$_{sen}$ durch den Bordrechner erfolgt.

Es gibt Akkumulatoren, die in einem gewissen Zyklus entladen und dann wieder aufgeladen werden müssen, um die Kapazität zu erhalten. Auch ein solcher Entlade- und Aufladevorgang kann, wenn der Bordrechner eine z. B. über 100 Minuten ununterbrochene Betriebsdauer bei großem Anteil einer gleichmäßigen Lastdrehzahl erkennt, anschließend durchgeführt werden, weil man annehmen kann, dass die Fahrt eine Autobahnfahrt ist.

Weiterhin kann beispielsweise bei hoher Lastanforderung und nicht hoher Geschwindigkeit die Spannungsvorgabe B$_{sen}$ erheblich abgesenkt werden, um die erforderliche Leistung des Dieselmotors auf die Straße zu bringen, wobei es hier eher um den Verbrauch geht, denn Dieselmotorleistung ist ausreichend vorhanden.

Weiterhin kann die Spannungsvorgabe B$_{sen}$ für Fahrzeuge, die für den Dauereinsatz in nördlichen Gebieten geplant sind, in denen es kalt ist und in denen auch am Tag mit Licht gefahren wird, verändert sein.

Erfindungsgemäß wird für den genannten Einsatz die Spannungsvorgabekurve um etwa 10 bis 15°C auf der Abszisse in Richtung niedrigere Temperaturen verschoben. Dadurch werden die Beleuchtungsmittel in diesem Fall zusätzlich geschont, weil die maximal zulässige Ladespannung bzw. B$_{senmax}$ eben erst bei niedrigeren Temperaturen vorgegeben wird.

Alle die aufgeführten betriebsspezifischen Parameter können in einem Code enthalten sein, der am Ende der Montagelinie (End of Line = EOL) eingegeben wird. In diesem Code muss der Akkumulatortyp enthalten sein, dem betriebsspezifische Eigenschaften, z. B. Ent- und Beladezyklus oder kein derartiger Zyklus, zugeordnet sind.

Weiterhin können in dem Code Stellen freigehalten oder zugeordnet werden, die fahrzeugbezogene Daten, wie Fahrzeugtyp, ob es sich um einen Fernverkehrs- oder Verteiler-Lkw handelt, und/oder ob ein abweichender elektrischer Widerstand zwischen Generator und Akkumulator installiert ist, beinhalten.

Der Generator und der daran angebaute Multifunktionsregler MFR sind preiswerte Standardbauteile, die in Millionen Stücken hergestellt werden. Die Verwendung dieser Bauteile ist deshalb sinnvoll. In diesem MFR ist aber die TK-Bildung mit der Temperatur des MFR beinhaltet. Dadurch würde die Spannungsvorgabe B$_{sen}$ durch die TK-Bildung nachträglich verfälscht werden.

Um dies zu vermeiden, muss der Wert aus der TK-Bildung kompensiert werden. Dies ist möglich durch einen Spannungskorrekturwert, mit dem entweder am Ausgang des ZBR die Spannungsvorgabe B$_{sen}$ oder am Spannungseingang in den ZBR die Bordspannung U$_B$ beaufschlagt wird.

In der Zeichnung sind schematische Diagramme für das erfindungsgemäße Verfahren angegeben.

Es zeigt:

Fig. 1      den Zusammenhang von Akkumulatortemperatur, Motorbetriebsdauer und Spannungsvorgabe B$_{sen}$,

Fig. 2      den Zusammenhang von Akkumulatortemperatur und Spannungsvorgabe B$_{sen}$,

Fig. 3      den Zusammenhang von der Motorlaufdauer und Spannungsvorgabe B$_{sen}$,

Fig. 4      den Verlauf der Schonspannung im Verhältnis zur normalen Spannung,

Fig. 5      den Stand der Technik, TK-Kennlinie,

Fig. 6      den Zusammenhang von Säuredichte, Akkumulatortemperatur und Spannungsvorgabe B$_{sen}$,

Fig. 7      den Zusammenhang von Säuredichte und Spannungsvorgabe B$_{sen}$,

Fig. 8      eine Spannungsvorgabekurve für nördliche Länder,

Fig. 9      eine Temperaturanpassungskurve für einen Akkumulator,

Fig. 10      Temperaturkennlinien von Kühlwasser und MFR,

Fig. 11      ein Schemabild für die Kompensation der TK-Bildung,

Fig. 12      einen Schaltplan.

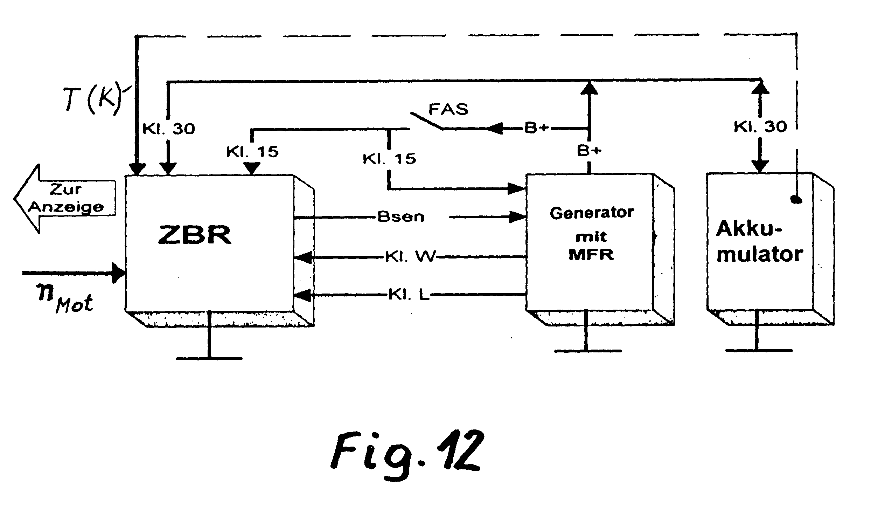

Die Fig. 12 zeigt einen Schaltplan für die Spannungsvorgabe B$_{sen}$ zur Regelung der Bordspannung. In den ZBR gehen die Daten von der Motordrehzahl des Verbrennungsmotors n$_{Mot}$, der Akkumulatorspannung Klemme Kl. 30, der Generatorspannung B+, die über den Fahranlassschalter FAS und Klemme Kl. 15 eingebbar ist, ein. Weiterhin ist hier beispielhaft die Akkumulatortemperatur T(K) in den ZBR eingegeben. Weiterhin gehen die Klemmen W und L (Kl. W, Kl. L) in den ZBR.

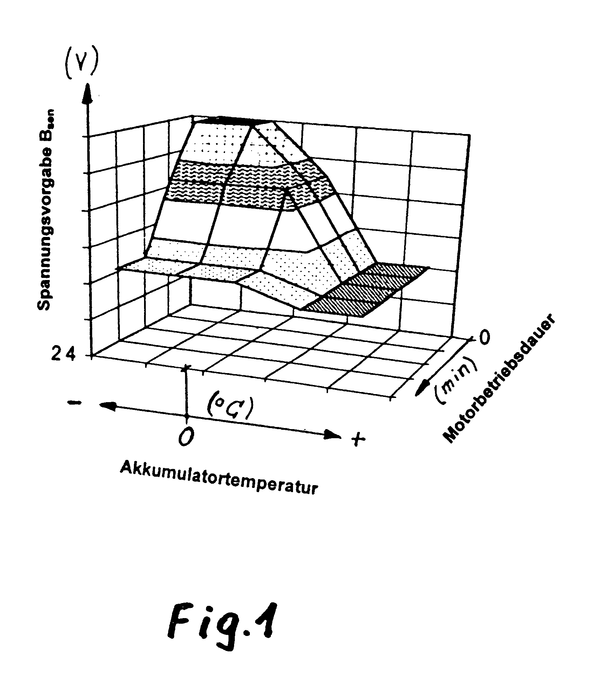

Die Fig. 1 zeigt ein Bild mit 3 Achsen, wobei die Achsen Motorbetriebsdauer und Akkumulatortem-

peratur die Spannungsvorgabe $B_{sen}$ ergibt. Beide Parameter, Motorbetriebsdauer und Akkumulatortemperatur wirken sich etwa gleichermaßen sensibel auf die Spannungsvorgabe $B_{sen}$ aus. Beispielsweise kann die Spannungsvorgabe $B_{sen}$ nach etwa 60 Minuten bei 0°C Akkumulatortemperatur von anfangs 30V auf etwa 26,5V abgesenkt werden, wobei dann der Akkumulator richtig aufgeladen ist. Zusätzlich wird bei der genannten abgesenkten Spannungsvorgabe gegenüber dem Stand der Technik noch Treibstoff gespart.

Wenn Leuchtmittel eingeschaltet sind, kann das ganze Bild um beispielsweise 0,5V oder 1V abgesenkt sein.

Wenn der Verbrennungsmotor abgestellt wird, beginnt beim Starten die Zeitzählung für die Motorbetriebsdauer wieder von Null. Die Akkumulatortemperatur wird, wie beschrieben, von der Außentemperatur abgeleitet und der errechnete Wert nach dem Start neu vorgegeben.

Das Bild der Fig. 1 sieht einer Schildmütze ähnlich, wobei der "Mützenteil" der sensible Bereich ist, der sowohl von der Akkumulatortemperatur als auch von der Motorbetriebsdauer bestimmt ist.

Der wenig sensible Teil ist der vordere Schildteil der Schildmütze, der vom Bereich höherer Akkumulatortemperaturen und der seitliche Schildteil, der vom Bereich längerer Motorbetriebsdauer bestimmt ist.

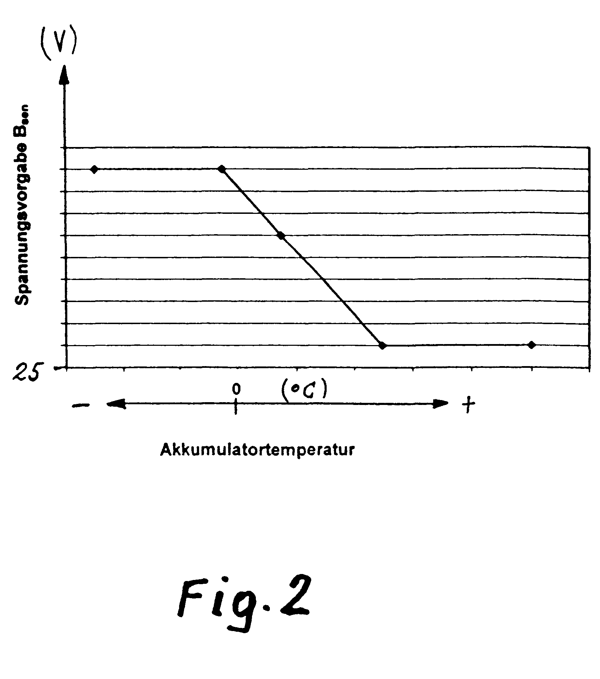

Die Fig. 2 zeigt den Verlauf der Spannungsvorgabe $B_{sen}$, abhängig von der Akkumulatortemperatur und ist in der Fig. 1 beinhaltet. Deutlich ist die Sensibilität der Spannungsvorgabe $B_{sen}$ im Bereich von wenigen Minusgraden bis hin zu Plusgraden, die durchaus schon im südlichen Europa auftreten können, erkennbar. Darunter und darüber ist die Spannungsvorgabe $B_{sen}$ zwar unterschiedlich, aber konstant. Der Grund hierfür ist, dass die Bordnetzspannung in den Minimal- und Maximalwerten limitiert ist, weil die Funktionsfähigkeit der elektrischen Komponenten, z. B. elektrische Verbraucher, sichergestellt sein muss.

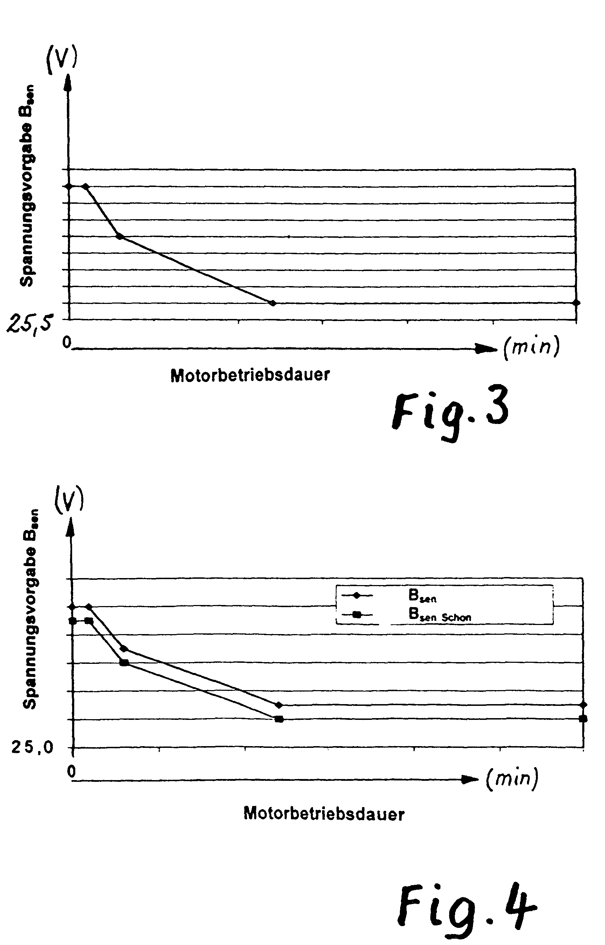

Die Fig. 3 zeigt den Verlauf der Spannungsvorgabe $B_{sen}$, abhängig von der Motorbetriebsdauer und ist ebenfalls in Fig. 1 beinhaltet. Deutlich ist hier zu sehen, dass, zeitlich gesehen, am Anfang der Motorbetriebsdauer die Spannungsvorgabe $B_{sen}$ sehr sensibel ist und anschließend die Spannungsvorgabe $B_{sen}$ bei längerer Motorbetriebsdauer, z. B. über 60 Minuten, konstant bleibt.

Die Fig. 4 zeigt die Schonspannungsvorgabe $B_{sen\,Schon}$ im Verhältnis zu $B_{sen}$, wenn Leuchtmittel, z. B. Stand- und/oder Abblendlicht, eingeschaltet sind.

Die Fig. 5 zeigt den Stand der Technik. Die TK-Kennlinie ist im Multifunktionsregler MFR, wie sie beispielsweise in den Generatoren , die der Anmelder verwendet, abgelegt sind. Im Bereich von +10°C bis +20°C sind die Kennlinien noch halbwegs im richtigen Bereich, jedoch außerhalb dieses Bereiches entsprechen sie nicht mehr der Realität. Die TK-Kennlinie ist mit der Kennlinie von Fig. 2 vergleichbar, jedoch sind die Kennlinien völlig unterschiedlich. Außerdem bezieht sich die Temperatur der TK-Kennlinie auf die Temperatur des MFR und nicht auf die Akkumulatortemperatur, was im Normalfall, unter Einbeziehung der Pkws, ein Fehler ist. Bei Pkws liegt eine ähnliche TK-Kennlinie vor, die sich aber auf eine Nennspannung von 12V bezieht. Die gezeigte TK-Kennlinie bezieht sich auf eine Nennspannung von 24V.

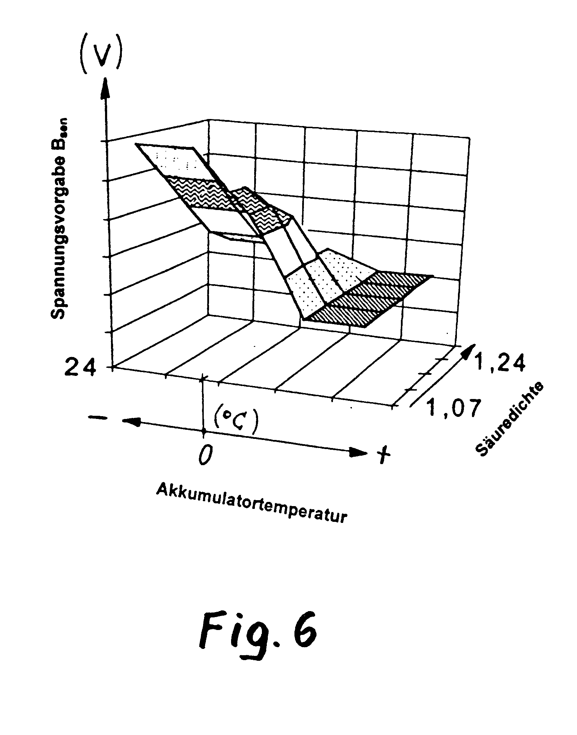

Die Fig. 6 zeigt ein Bild mit 3 Achsen, wobei die Achsen Säuredichte des Akkumulators und Akkumulatortemperatur die Spannungsvorgabe $B_{sen}$ ergibt. Der Vorteil dieses Ladevefahrens ist die Verwendung des Istwertes der Säuredichte, da man aufgrund des Istwertes den aktuellen Ladezustand des Akkumulators hat und aufgrund dessen sehr genau laden kann. Serienmäßig ist jedoch bis jetzt kein Akkumulator mit eingebautem Säuredichtesensor kaufbar, wahrscheinlich aufgrund von Kosten, die man nicht haben will.

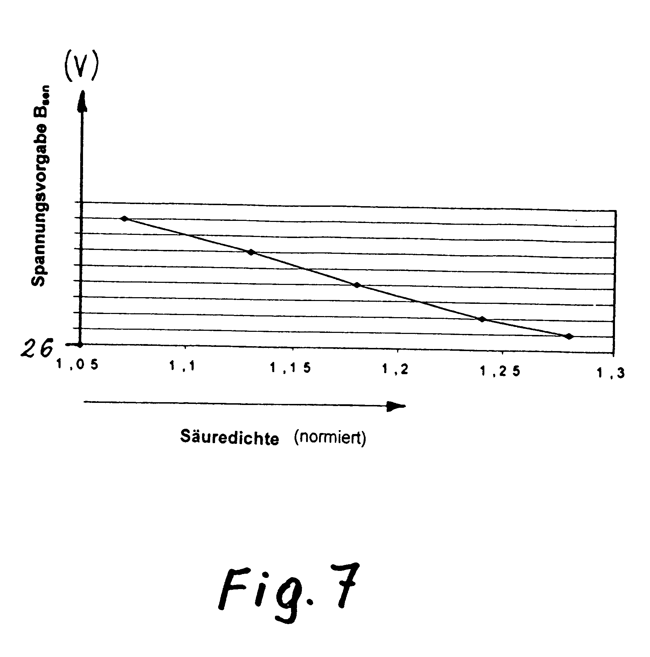

Die Fig. 7 zeigt die Spannungsvorgabe $B_{sen}$, abhängig von der Säuredichte des Akkumulators. Die Kennlinie ist in Fig. 6 beinhaltet.

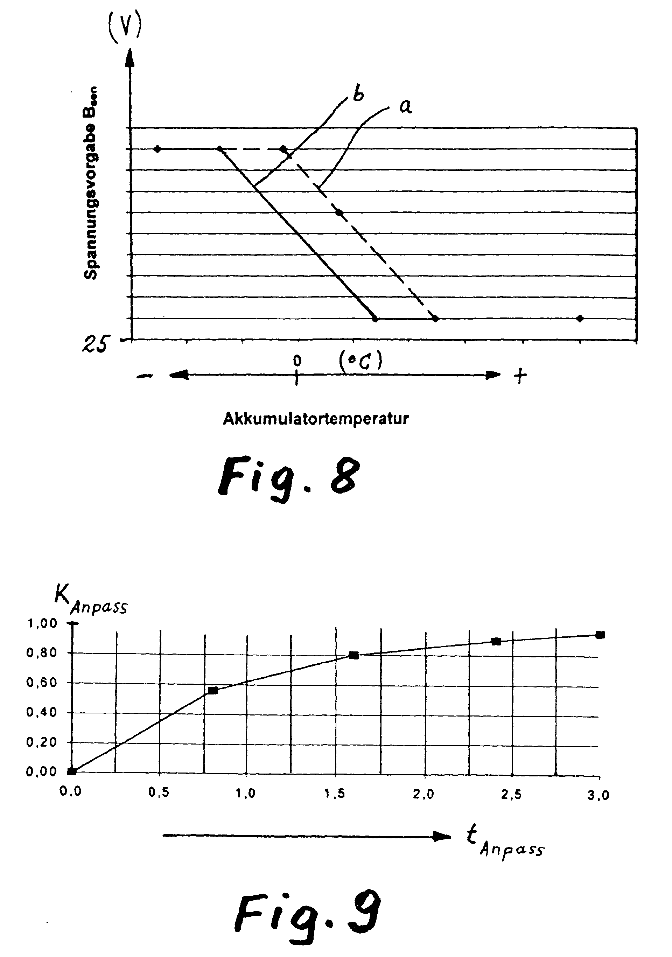

Die Fig. 8 zeigt eine Kurve b, die in der Abszisse um einen Temperaturunterschied von ca. 10°C bis 15°C in Richtung niedrigere Temperaturen von der Kurve a, die beispielsweise für alle anderen Klimazonen gültig ist, verschoben ist. Die Kurve b ist nur für Fahrzeuge gedacht, die einen Dauereinsatz in nördlichen Regionen, wie z. B. Nordschweden oder Nordrussland haben und wo auch tagsüber mit Licht gefahren werden muss. Durch die erfindungsgemäße Maßnahme wird erreicht, dass die Spannungsvorgabe $B_{senmax}$ erst bei niedrigeren Temperaturen erreicht wird und Beleuchtungsmittel somit geschont werden.

Zusätzlich ist noch die Schonspannungsvorgabe $B_{sen\,Schon}$ eingebbar, die eine weitere Schonung der Leuchtmittel zur Folge hat.

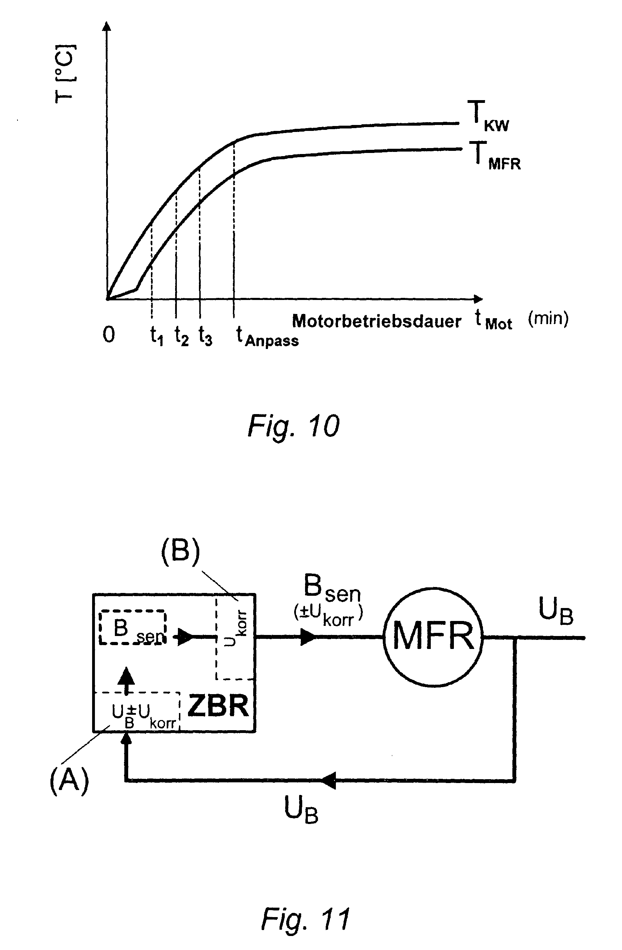

In Fig. 9 ist eine Kurve, mittels derer die rechnerische Anpassung der Akkumulatortemperatur besser an eine veränderte Außentemperatur durchführbar ist. Die Kurve ist eine Vereinfachung der Kurve, wie sich bei einer Außentemperaturveränderung die Akkumulatortemperatur an die Außentemperatur annähert (Exponentialfunktion). Die als Beispiel eingetragenen 5 Punkte im Diagramm sind genaue Punkte der genannten Exponentialfunktion und werden in der EOL in den Bordrechner eingegeben.

Wie bereits erwähnt, hat der Bordrechner nicht ausreichend Kapazität, alle Punkte der Exponentialfunktion zu errechnen.

Deshalb ist der Bordrechner so programmiert, dass er für das Errechnen von Punkten, die zwischen den genannten 5 Punkten liegen, linear interpoliert und damit auf einfache Weise eine gute Annäherung zur rechnerischen Bestimmung der Akkumulatortemperatur erreicht.

Abszisse ist mit $t_{Anpass}$ benannt und ist der Quotient aus $t_{(min)} : t_{(255)}$

$t_{(min)}$ ist die Zeit zwischen dem Abstellen des Motors (AUS) und dem darauffolgenden Starten (EIN) des Verbrennungsmotors,

$t_{(255)}$ ist die Zeit, in der die Annäherung der Akkumulatortemperatur an eine veränderte Außentemperatur, die als Sprungfunktion, z. B. Fahrzeug fährt in die Kältekammer, vorgegeben wird, zu etwa 65% berücksichtigt ist.
In diesem Beispiel ist diese Zeit 255 Minuten, d. h. nach 255 Minuten hat sich die Akkumulatortemperatur zu 65%, $K_{Anpass} \triangleq 0{,}65$, einem Außentemperatursprung angepasst. Damit ist $t_{Anpass} = 1 \triangleq 255$ Minuten, $t_{Anpass} = 2 \triangleq 510$ Minuten usw.
Eine 90%ige Anpassung, $K_{Anpass} = 0{,}9$, der Akkumulatortemperatur an eine veränderte Außentemperatur wird mit $t_{Anpass} = 3 \triangleq 765$ Minuten erreicht.
Die Zeit $t_{(255)}$ kann unterschiedlich sein und ist abhängig von fahrzeugspezifischen Daten und/oder Daten des Akkumulators.

Die Fig. 10 zeigt, wie sich die Temperatur $T_{KW}$ des Kühlwassers eines Antriebsmotors, z. B. Dieselmotors, und die Temperatur $T_{MFR}$ des Multifunktionsreglers MFR in Abhängigkeit der ununterbrochenen Motorbetriebsdauer $t_{Mot}$ verhält. Die Temperatur $T_{MFR}$ des Multifunktionsreglers MFR folgt im zeitlichen Abstand und mit einem etwas geringeren Temperaturwert, dem Temperaturverlauf $T_{KW}$ des Kühlwassers eines Antriebsmotors. Als Beispiel ist hier der genannte Verlauf in einem typischen Lkw, z. B. in einem Fernverkehrs-Lkw, dargestellt. Andere Nutzfahrzeuge können andere Kennungen haben.

In der Motorbetriebsdauer von Startbeginn $t_{Mot} = 0$ bis zur Motorbetriebsdauer $t_{Anpass}$, in der das Kühlwasser des Antriebsmotors z. B. 90% der geregelten Kühlwassertemperatur $T_{KW}$ erreicht, kann der Bordrechner in mehreren Zeitabschnitten $t_1$, $t_2$, $t_3$ die Temperatur $T_{MFR}$ des Multifunktionsreglers MFR errechnen, wenn dem Bordrechner der Nachlauf der Temperatur des Multifunktionsreglers MFR bekannt ist. Die momentane Temperatur $T_{KW}$ des Kühlwassers des Antriebsmotors ist dem Bordrechner bekannt.

Wenn dann z. B. 90% der geregelten Kühlwassertemperatur $T_{KW}$ erreicht sind und der Antriebsmotor weiterhin in Betrieb ist., kann der Bordrechner in einer Art Sprungfunktion von der geregelten Kühlwassertemperatur ausgehen, um Speicherkapazität zu sparen.

Alternativ kann dem Bordrechner die gemessene Reglertemperatur eingegeben werden.

Die Kenntnis der Temperatur $T_{MFR}$ des Multifunktionsreglers MFR ist von Startbeginn an notwendig, da auch in diesem Bereich die richtige Ladespannung dem Akkumulator für z. B. einen erneuten Start vor dem Erreichen der Zeit $t_{Anpass}$ zugute kommt.

Bei jedem neuen Motorstart beginnt die Zeitzählung der Motorbetriebsdauer $t_{Mot}$ von Neuem.

Die Fig. 11 zeigt, wie die im Multifunktionsregler MFR integrierte TK-Bildung, die nicht mehr als Regelsignal dient, kompensiert wird.

Diese Maßnahme ist deshalb sinnvoll, weil der Generator mit dem Multifunktionsregler MFR in Millionen Stücken hergestellt wird und die Kompensation der TK-Bildung, die rein rechnerisch gebildet wird, wesentlich billiger ist, als den Multifunktionsregler umzugestalten.

Die Spannungsvorgabe $B_{sen}$ würde durch die TK-Bildung, die, wie eingangs erwähnt auch wegen der fehlerhaften Annahme, die Temperatur des Multifunktionsreglers MFR entspräche der Temperatur des Akkumulators, verfälscht werden, so dass der Akkumulator zwar besser, aber immer noch nicht mit der erforderlichen Ladespannung geladen werden würde.

Für die Kompensation des Wertes der TK-Bildung gibt es zwei Möglichkeiten:

- entweder wird die Spannungsvorgabe $B_{sen}$ am Ausgang des Bordrechners ZBR mit einem Spannungskorrekturwert $U_{Korr}$ beaufschlagt, Fall (B),

- oder die gemessene Bordspannung $U_B$ am Eingang des Bordrechners ZBR wird mit einem Spannungskorrekturwert $U_{Korr}$ beaufschlagt, Fall (A).

**Patentansprüche**

1. Verfahren für die Generatorregelung eines Kraftfahrzeuges, mit einem Generator, der mit einem Multifunktionsregler (MFR) oder einem anderen Regler mit einstell- und/oder vorgebbarer Regelspannung zur Regelung der Generatorspannung versehen ist und der Multifunktionsregler (MFR) die Akkumulatorspannung als Eingangsregelgröße für die Regelung der Generatorspannung verwendet und, abhängig von der Temperatur des Multifunktionsreglers, dieser eine TK-Bildung vornimmt, mit der die Regelspannung für den Generator beaufschlagt wird, mit einem zentralen Bordrechner (ZBR) oder gleichwertigen Rechner, der die Bordspannung und die Drehzahl des Verbrennungsmotors als Eingangssignale hat, **dadurch gekennzeichnet, dass** durch die Verwendung von mindestens zwei betriebsspezifischen Parametern, wie beispielsweise der Akkumulatortemperatur und der ununterbrochenen Motorbetriebsdauer, im zentralen Bordrechner (ZBR) oder gleichwertigen Rechner die Bildung einer Spannungsvorgabe $B_{sen}$ erfolgt, die vom zentralen Bordrechner (ZBR) als Regelsignal für die Spannungsregelung des Generators an den Multifunktionsregler (MFR) eingegeben wird, wobei die Akkumulatorspannung und die TK-Bildung als Regelsignale außer Kraft gesetzt werden.

**2.** Verfahren nach Anspruch 1, **dadurch gekennzeichnet, dass** die Akkumulatortemperatur eine errechnete Größe ist, die vom zentralen Bordrechner (ZBR) oder gleichwertigen Rechner aus von mindestens zwei, im zeitlichen Abstand gemessenen Außentemperaturwerten errechenbar ist.

**3.** Verfahren nach Anspruch 1 und 2, **dadurch gekennzeichnet, dass** die Kennlinie Spannungsvorgabe $B_{sen}$ in Abhängigkeit der Akkumulatortemperatur eine Rampe bildet, an deren jeweiligem Ende sich eine etwa horizontale Gerade anschließt oder einen ähnlichen Verlauf hat.

**4.** Verfahren nach Anspruch 1, **dadurch gekennzeichnet, dass** die Kennlinie, Spannungsvorgabe $B_{sen}$ in Abhängigkeit der Motorbetriebsdauer, eine Rampe mit einer gleichmäßigen oder zwei oder mehr nicht gleichen Steigungen oder eine die Rampe ersetzende Kurve ist, an deren jeweiligem Ende sich eine etwa horizontale Gerade anschließt.

**5.** Verfahren nach Anspruch 1, **dadurch gekennzeichnet, dass** die Säuredichte und die Akkumulatortemperatur Parameter für die Spannungsvorgabe $B_{sen}$ sind.

**6.** Verfahren nach einem oder mehreren der vorhergehenden Ansprüche, **dadurch gekennzeichnet, dass**, wenn Leuchtmittel eingeschaltet sind, eine Schonspannung $B_{sen\ Schon}$ vorgegeben wird, die unterhalb der berechneten Spannungsvorgabe $B_{sen}$ ist.

**7.** Verfahren nach Anspruch 1, **dadurch gekennzeichnet, dass** nach Betätigen eines Bremsorgans, vorzugsweise einer Dauerbremse, die Spannungsvorgabe $B_{sen}$ unter Berücksichtigung von mindestens einem Parameter, wie beispielsweise der Akkumulatortemperatur oder der Säuredichte, auf den zulässig höchsten Wert angehoben wird, solange, bis das Gaspedal wieder betätigt wird.

**8.** Verfahren nach Anspruch 1, **dadurch gekennzeichnet, dass** der Akkumulatortyp und damit auch die maximale Ladespannung, abhängig von der Akkumulatortemperatur, in der "End of Line" (EOL) (Montagelinie) durch einen Code in den Rechner eingebbar ist.

**9.** Verfahren nach Anspruch 8, **dadurch gekennzeichnet, dass** mit der Eingabe des Akkumulatortyps in der "End of Line" (EOL) auch der optimale Belade- und Entladezyklus oder auch keiner zur Erreichung einer maximalen Lebensdauer des Akkumulators enthalten ist.

**10.** Verfahren nach Anspruch 1, **dadurch gekenn-** zeichnet, dass fahrzeugspezifische Daten, beispielsweise unterschiedliche elektrische Widerstände zwischen Akkumulator und Generator, unterschiedliche Fahrzeugtypen wie Fernverkehrs-Lkw, Verteiler-Lkw, Kipper-Lkw, Reisebus oder Linienbus, mit dem Code für das Verfahren in der "End of Line" (EOL) eingebbar sind.

**11.** Verfahren nach Anspruch 1, **dadurch gekennzeichnet, dass** für Fahrzeuge, die ihren Einsatz in nördlichen Ländern haben, in denen auch am Tag mit Licht gefahren wird, die Kennlinie (a) Spannungsvorgabe/Akkumulatortemperatur in Richtung niedrigere Temperatur verschoben ist, Kennlinie (b).

**12.** Verfahren nach Anspruch 1, **dadurch gekennzeichnet, dass** anstatt der Anpassungskurve (Exponentialfunktion) der Akkumulatortemperatur an die Außentemperatur pro Zeiteinheit mehrere Punkte dieser Kurve in den Bordrechner eingegeben werden (Fig. 9), der diese Punkte direkt und dazwischenliegende Punkte durch lineare Interpolation zur rechnerischen Ermittlung der Akkumulatortemperatur verwendet.

**13.** Verfahren nach einem oder mehreren der vorhergehenden Ansprüche, **dadurch gekennzeichnet, dass** die Temperatur des Multifunktionsreglers (MFR) aus der Kühlwassertemperatur und/oder anderen betriebsspezifischen und/oder fahrzeugspezifischen Daten gebildet wird.

**14.** Verfahren nach einem oder mehreren der vorhergehenden Ansprüche, **dadurch gekennzeichnet, dass** die Wirkung der im Multifunktionsregler (MFR) vorhandenen TK-Bildung kompensiert wird.

**15.** Verfahren nach den Ansprüchen 13 und 14, **dadurch gekennzeichnet, dass** die Spannungsvorgabe $B_{sen}$ vor der Eingabe in den Multifunktionsregler (MFR) mit einem Spannungskorrekturwert, der sich aus der Differenz der Spannungsvorgabe $B_{sen}$ und dem Spannungswert, der sich aus der Multifunktionsreglertemperatur und dem dazugehörigen Spannungswert aus der TK-Bildung ergibt, $U_{Korr}$ beaufschlagt wird.

**16.** Verfahren nach den Ansprüchen 13 und 14, **dadurch gekennzeichnet, dass** der Eingangswert der Bordspannung ($U_B$) in den Bordrechner (ZBR) mit einem Spannungskorrektorwert, der sich aus der Differenz der Spannungsvorgabe $B_{sen}$ und dem Spannungswert, der sich aus der Multifunktionsreglertemperatur und dem dazugehörigen Spannungswert aus der TK-Bildung ergibt, $U_{Korr}$ beaufschlagt wird

**17.** Verfahren nach einem oder mehreren der vorhergehenden Ansprüche, **dadurch gekennzeichnet, dass** das Eingangssignal der Bordspannung $U_B$ im Bordrechner (ZBR) mit einer Glättung beaufschlagt wird und dieses Signal für die weitere Bewertung der Bordspannung herangezogen werden kann.

**18.** Verfahren nach einem oder mehreren der vorhergehenden Ansprüche, **dadurch gekennzeichnet, dass** in den Kennlinien zur Bildung von $B_{sen}$ der Maximal- und Minimalwert der Bordspannung ($U_B$) berücksichtigt ist, so dass alle elektrischen Komponenten, z. B. elektrische Verbraucher, im zulässigen Bereich versorgt sind.

Fig.1

Fig. 2

Fig.3

Fig.4

**Stand der Technik**

**TK-Kennlinie im Regler bei 28.5 V**

*Fig.5*

Fig. 6

**Fig. 7**

**Fig. 8**

**Fig. 9**

Fig. 10

Fig. 11

Fig. 12

EP 1 134 885 A1

**Europäisches Patentamt**

# EUROPÄISCHER RECHERCHENBERICHT

Nummer der Anmeldung

EP 01 10 5323

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 5 079 716 A (LENHARDT ET AL.) 7. Januar 1992 (1992-01-07) * Spalte 2, Zeile 28-61 * * Spalte 3, Zeile 34 - Spalte 7, Zeile 63; Abbildungen 1-3 * --- | 1-5, 7-10,18 | H02P9/30 H02J7/14 H02J7/24 |
| Y | US 4 659 977 A (KISSEL ET AL.) 21. April 1987 (1987-04-21) * Zusammenfassung * * Spalte 3, Zeile 43 - Spalte 5, Zeile 40 * * Spalte 7, Zeile 42-68 * * Spalte 8, Zeile 12-25; Abbildungen 1-4 * --- | 1-5, 7-10,18 | |
| A | PATENT ABSTRACTS OF JAPAN vol. 2000, no. 3, 30. März 2000 (2000-03-30) -& JP 11 355967 A (NISSAN MOTOR CO LTD.), 24. Dezember 1999 (1999-12-24) * Zusammenfassung; Abbildungen 2-4,7 * --- | 1 | |
| A | US 5 374 886 A (KOHL ET AL.) 20. Dezember 1994 (1994-12-20) * Spalte 1, Zeile 46 - Spalte 2, Zeile 7 * * Spalte 3, Zeile 50-60 * * Spalte 4, Zeile 50 - Spalte 6, Zeile 24; Abbildungen 1,2,6,7 * --- | 1,14-16 | RECHERCHIERTE SACHGEBIETE (Int.Cl.7) H02P H02J |
| A | PATENT ABSTRACTS OF JAPAN vol. 1009, no. 13, 30. November 1998 (1998-11-30) -& JP 10 215527 A (DENSO CORP), 11. August 1998 (1998-08-11) * Zusammenfassung; Abbildungen 1-6 * ----- | 1 | |

Der vorliegende Recherchenbericht wurde für alle Patentansprüche erstellt

| Recherchenort | Abschlußdatum der Recherche | Prüfer |
|---|---|---|
| BERLIN | 24. Juli 2001 | Beitner, M |

**ANHANG ZUM EUROPÄISCHEN RECHERCHENBERICHT**
**ÜBER DIE EUROPÄISCHE PATENTANMELDUNG NR.**                    EP 01 10 5323

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2001

| Im Recherchenbericht angeführtes Patentdokument | Datum der Veröffentlichung | Mitglied(er) der Patentfamilie | Datum der Veröffentlichung |
|---|---|---|---|
| US 5079716 A | 07-01-1992 | KEINE | |
| US 4659977 A | 21-04-1987 | CA 1233508 A | 01-03-1988 |
| | | DE 3579410 D | 04-10-1990 |
| | | EP 0179985 A | 07-05-1986 |
| | | JP 6067133 B | 24-08-1994 |
| | | JP 61088733 A | 07-05-1986 |
| | | MX 159712 A | 08-08-1989 |
| JP 11355967 A | 24-12-1999 | KEINE | |
| US 5374886 A | 20-12-1994 | DE 4037640 A | 04-06-1992 |
| | | WO 9210019 A | 11-06-1992 |
| | | DE 59105328 D | 01-06-1995 |
| | | EP 0512081 A | 11-11-1992 |
| | | ES 2072019 T | 01-07-1995 |
| | | JP 5503203 T | 27-05-1993 |
| JP 10215527 A | 11-08-1998 | KEINE | |

EPO FORM P0461

Für nähere Einzelheiten zu diesem Anhang : siehe Amtsblatt des Europäischen Patentamts, Nr.12/82